# EUROPEAN PATENT SPECIFICATION

(11) **EP 2 743 597 B1**
(45) Date of publication and mention of the grant of the patent: **13.07.2016**
(21) Application number: 13196178.1
(22) Date of filing: 09.12.2013
(51) Int. Cl.: F24F 7/06, F24F 11/00, F24F 13/02

(54) **Ventilation system with flow-regulating cartridge**
Belüftungsanlage mit Kassette zur Regelung des Durchflusses
Système de ventilation avec cartouche de régulation de débit

(30) Priority: 12.12.2012 NL 2009975
(43) Date of publication of application: 18.06.2014
(73) Proprietor: Vero Duco N.V., 8630 Veurne (BE)
(72) Inventor: Renson, Luc Louis, BE- 8620 Nieuwpoort (BE)
(74) Representative: Nederlandsch Octrooibureau

(56) References cited:
- EP-A2- 2 363 656
- WO-A1-00/01991
- FR-A1- 2 805 601
- NL-C- 1 038 209

## Description

The invention relates to a ventilation system, comprising a central housing having at least one nozzle, an active ventilator in the housing and a flow-regulating means which comprises: a flow-rate regulator for regulating an air flow through the nozzle, at least one measuring system for measuring a property of the air, and a regulating system for controlling the flow-rate regulator on the basis of a property of the air measured by the measuring system, wherein the central housing is provided with a continuous peripheral wall with peripheral edges facing away from one another, between which the least one nozzle is located, and with a cover on one of the peripheral edges, which cover covers the interior space of the central housing.

A ventilation system of this type is known from NL-C-1038209. It may be used, for example, to centrally extract air from the different rooms of a building. The degree of extraction can be set separately for each room, depending on the type of use of the rooms and the number of people located therein. For this purpose, the flow-rate regulator which is located in the relevant duct connecting said room to the ventilator is controlled in the desired manner by the regulating system.

Parameters which may be involved are the CO₂ content, atmospheric humidity, temperature and the like. If, for example, a large number of people are located in a certain room, the CO₂ content may reach undesired levels. The increase in the CO₂ content is detected by the relevant sensor of the measuring system in such a way that the software of the regulating system can adjust the flow-rate regulator to a higher flow rate. According to another example, the humidity of the air extracted from a bathroom can cause the flow rate to increase. The flow rate can be reduced as soon as a decrease in the relevant parameter is detected.

Although extracting air from the relevant rooms is mentioned here by way of example, it is also conceivable to supply air to the relevant rooms via the flow-rate regulators using a ventilation installation of this type. It is also possible to provide dual ducts, by means of which, on the one hand, air can be supplied to a certain room and, on the other hand, air can be extracted from said room under the influence of the ventilator.

In the ventilation system known from NL-C-1038209, pipe-shaped regulating units are placed onto the nozzles on the outside of the central housing, which regulating units accommodate a flap having a drive and a measuring unit. Connection cables which lead from the relevant regulating units up to and into the central housing ensure a connection to the central regulating system located in the housing. A ventilation system is also known from EP 2 363 656.

The drawback of this known ventilation system is that it is inconvenient to subsequently install or replace a regulating unit. For this purpose, it is necessary to detach and optionally shorten the line connected to the relevant nozzle. In order to save space, the ventilation systems are often arranged in a limited space, which can cause problems when carrying out this work. A further drawback is that the connections, in particular the cables between the flow-rate regulator and the regulating system, are situated outside the central housing, which increases the space requirement and vulnerability of the ventilation system.

It is therefore an object of the invention to provide a ventilation system of the above-described type which does not have these drawbacks and which is easier and more reliable to handle during installation and use. This object is achieved according to claim 1.

The unit or carrier which is responsible for varying the volumetric flow through the relevant nozzle can be pushed or placed into the guide transversely with respect to the nozzle, or transversely with respect to a duct connected to the nozzle, or at right angles to the passage direction or axis of the nozzle or duct, respectively. This means that the carrier can be installed or replaced without it being necessary to detach or adapt the connection of the line to the relevant nozzle.

The carrier is preferably substantially immovable in a transverse direction with respect to the receiving direction after it has been received in the guide. The guide is oriented transversely with respect to the axis or passage direction of the nozzle or duct, respectively. The guide and the carrier can be arranged at different positions. According to a first option, the guide and the carrier are located inside the central housing; the cover preferably covers both the guide and a carrier optionally accommodated therein. According to another option, the guide and the carrier can be located outside the central housing or outside the peripheral wall and/or preferably outside the periphery of the cover.

An important advantage is furthermore that the external dimensions of the ventilation system and the lines connected thereto are not dependent on whether or not the carriers or regulating units are present. As a result, the space requirement is properly determined and limited. The connections and cables for the various functions of the carrier or regulating unit are also accommodated entirely within the central housing, which has a positive effect on the reliability. The ventilation system according to the invention also has the advantage that its exterior has a better appearance and is less susceptible to soiling, since the cluttered impression caused by the various cables has been eliminated by concealing said cables from view under the cover.

The carrier is preferably located at the outlet of the nozzle in the central housing at a distance from the free end of the nozzle. In that case, unlike in the known ventilation system, the nozzles remain free of additional elements, so that the relevant lines can be clearly connected without the need to consider the carriers or regulating units. In this variant, the carriers or regulating units themselves are well protected from external influences in the interior of the central housing, which benefits the service life and reliability.

The nozzles preferably form part of the central housing; in other words they can be integral with the peripheral wall. However, a variant is also conceivable in which the nozzles form separate parts which are placed onto the peripheral wall.

The carrier can also comprise the measuring system and/or the regulating system. The measuring system is preferably provided on the movable part of the flow-rate regulator. In particular, the measuring system can be provided on a side of the flow-rate regulator facing the interior space of the housing. In that case, it is advantageous to provide the flow-rate regulator with relatively small openings or leakage flow openings via which air from the line can reach the relevant sensor on the movable part of the flow-rate regulator. However, as an alternative, the measuring system can also be located on the side of the flow-rate regulator facing away from the interior space of the housing.

The measuring system can comprise a sensor unit, for example, for measuring a property of the air, such as the CO2 content, the air humidity or the like, said sensor unit emitting a signal which is a measurement of said property and being connected to the regulating system. According to a simple embodiment, the sensor unit can comprise a sensor having integrated electronics for emitting a measurement signal, such as a sensor integrated on a printed circuit board.

As already mentioned, according to one variant the carriers or regulating units can be well protected in the interior of the central housing. In this connection, the central housing is provided with a continuous peripheral wall with peripheral edges facing away from one another, between which the at least one nozzle is located, and with a cover on one of the peripheral edges, which cover covers the interior space of the central housing.

The various components of the ventilation system, in particular the ventilator, the carriers or regulating units and the central regulating system, can be arranged in their predetermined positions in the central housing in a simple manner. After the electrical connections between said components have been arranged, for example via a bus system which is known per se, the single unit can be hermetically sealed by placing the cover on the peripheral wall. The peripheral wall can, for example, be permanently sealed at the edge opposite the cover by means of a base which is optionally integrally formed.

In this case, as mentioned, it is advantageous to provide a guide or receptacle in which the carrier is accommodated with a narrow fit by being pushed inwards, so that the carrier is substantially immovable in a transverse direction with respect to the receiving direction after it has been received in the guide/receptacle.

An intermediate wall is preferably located in the central housing between the two peripheral edges, it being possible for said intermediate wall to contain at least one mouth in which the carrier is accommodated, preferably by being pushed into the mouth. It is therefore possible for the carrier to be arranged in a stable manner in the housing. The stable position of the carrier can be even further improved if the base of the central housing is provided with positioning elements, such as ridges, into or onto which the carrier can be placed. A cover is also arranged on one of the peripheral edges, which cover covers the interior space of the central housing. The mouth which is associated with a guide, via which mouth the carrier can be pushed into the guide, as described above, faces the peripheral edge on which the cover is located in such a way that, in one variant, the cover covers both the guide and a carrier optionally accommodated therein.

The carrier preferably comprises a ring element in which a rotatable or displaceable flap of the flow-rate regulator is accommodated. Said ring element can in particular be aligned with the nozzle, preferably in such a way that the contour of the ring element corresponds to the contour of the nozzle to form a continuous flow duct. The nozzle and the ring element therefore merge substantially seamlessly into one another, as a result of which an undisturbed flow is ensured while the flow rate can still be well controlled. As is known, the flow-rate regulator can comprise a drive, which drive is provided on or in the carrier.

It is of course possible for a plurality of nozzles to be provided, each with a respective guide for accommodating the carrier. The ventilation system can be operated in various different ways. According to a first option, the ventilator can be configured to suck in air via at least one nozzle and the central housing comprises a discharge for discharging the air which is sucked in via the at least one nozzle. According to a second option, the ventilator can be configured to emit air via at least one nozzle and the housing comprises an input for supplying the air which is emitted via the at least one nozzle.

The invention also relates to a carrier, preferably in the form of a cartridge, for a ventilation system as described above, comprising a flow-rate regulator and at least one measuring system for measuring a property of the air at the flow-rate regulator, wherein at least one supporting element is provided for support on the guide or the base of the central housing. In this case, the measuring system can be provided on the flow-rate regulator; a regulating system can also be provided. The carrier can also comprise a ring element in which a rotatable or displaceable flap is accommodated. Said ring element can support a drive for driving the flap. At least one supporting element can also be provided for supporting the carrier in the guide of the ventilation system.

The invention further relates to a building, comprising at least one room, a ventilation system according to any of the claims 1-13.

The invention will be explained in more detail below with reference to the exemplary embodiment illustrated in the figures.
Figure 1 shows a building with an embodiment of the ventilation system according to the invention.
Figure 2 shows a variant of the housing of the ventilation system.
Figure 3 shows a partially cut-away cross section of the housing.
Figure 4 shows a variant of a carrier for the housing from Figure 2.
Figure 5 shows a further embodiment of the ventilation system.

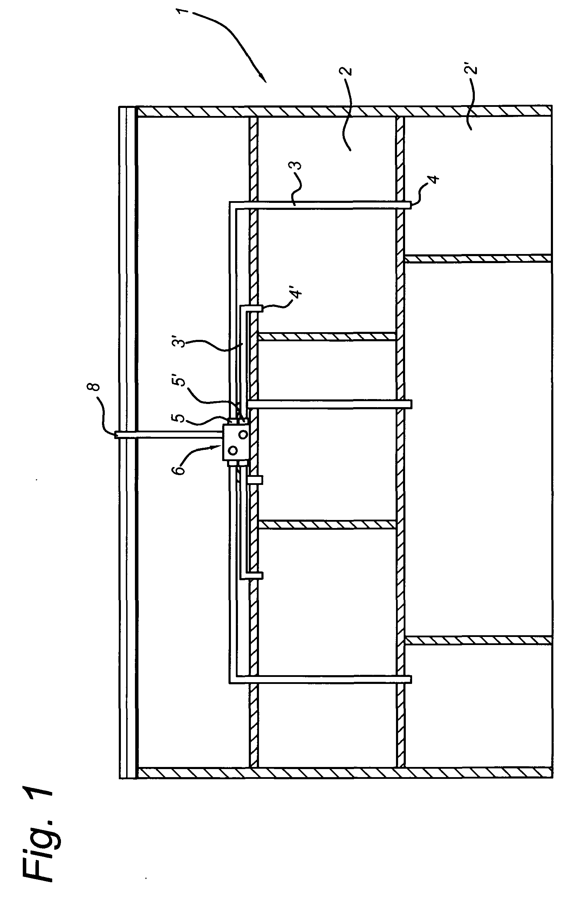

The building illustrated in Figure 1, in particular a dwelling 1, contains a plurality of rooms 2, 2',... The ventilation system used in said building can be configured to extract air from the rooms, to supply air to the rooms or to both supply and discharge air. In the latter case, two ducts are provided for each room. In the illustrated exemplary embodiment, each room 2, 2', ... is provided with a single duct 3, 3', ... which opens into the relevant room via a valve 4, 4', ... The ducts 3, 3',... are all connected to a nozzle 5,5', ... of the central housing 6 of the ventilation system. Said central housing contains an active ventilator 7, in a manner known per se, for extracting air from the ducts, or for emitting air to the ducts. The air which is extracted from the rooms can be conducted to the outside via the discharge 8.

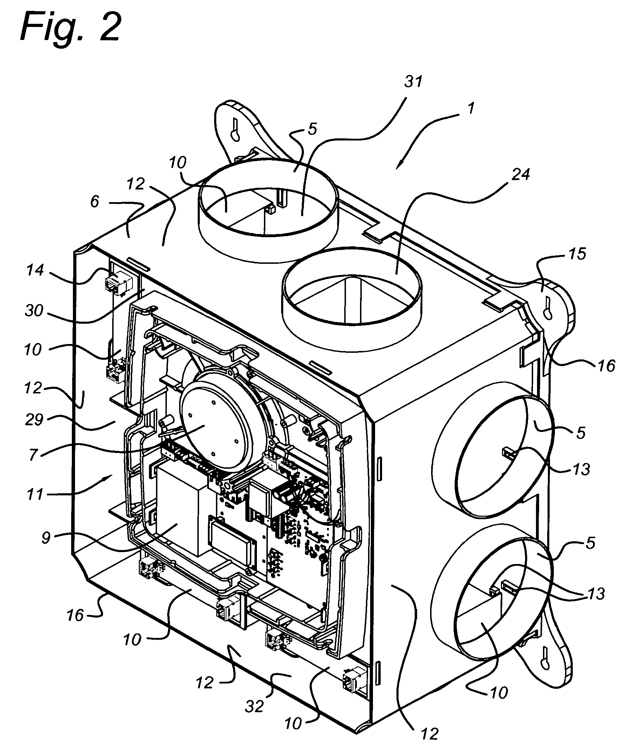

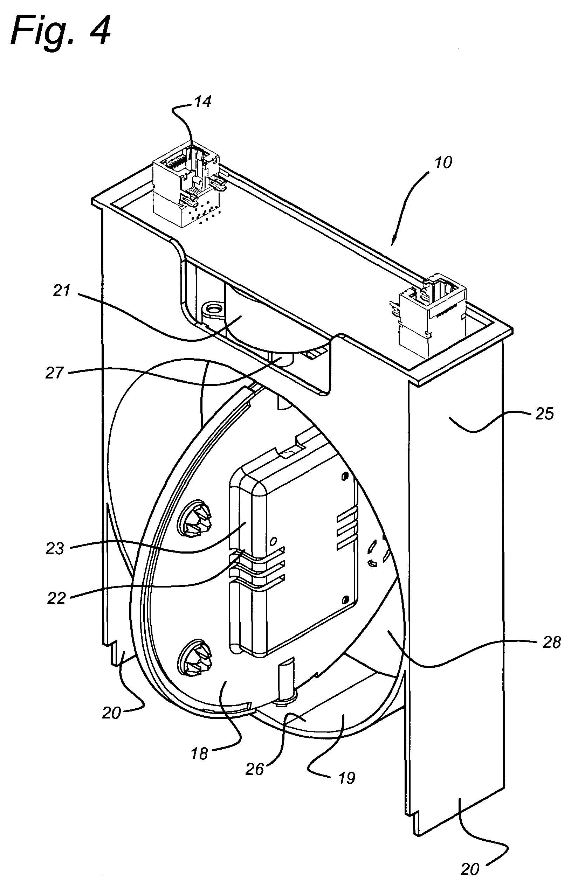

Figure 2 shows a variant of the ventilation system comprising a housing 6 without a cover. The housing 6 comprises four side walls 12 with inlet nozzles 5 and an outlet nozzle 24. An intermediate wall 30 is located in the interior of the housing 6, on which intermediate wall 30 an active ventilator 7 is accommodated, together with a regulating system 9. The intermediate wall 30 forms the partition between the suction chamber 31 into which the nozzles 5 issue and the component area 32. The mouths 29 of the guides or chambers 11 are provided adjacent to the side walls 12 in the intermediate wall 30 in the interior of the housing 6. Carriers 10 are accommodated in predetermined guides. The guide 11 comprises the carrier 10 with a narrow fit, so that the carrier 10 is substantially immovable in the guide 11. The guide 11 adjoins the side wall 12 in such a way that one side of the carrier 10 touches said side wall 12. As a result, the air stream through the nozzle can only be supplied or discharged via the carrier 10 and the flap 18 provided therein (see Figure 4). Another side of the carrier is oriented towards the interior of the housing 6. The housing 6 further comprises a base part 15, on which positioning elements 13 are arranged inside the housing 6, so that the carrier 10 is also substantially immovable in the transverse direction on its underside. The carrier 10 is provided with connection elements 14 for connecting the carrier 10 to the regulating system 9 via cables (not illustrated).

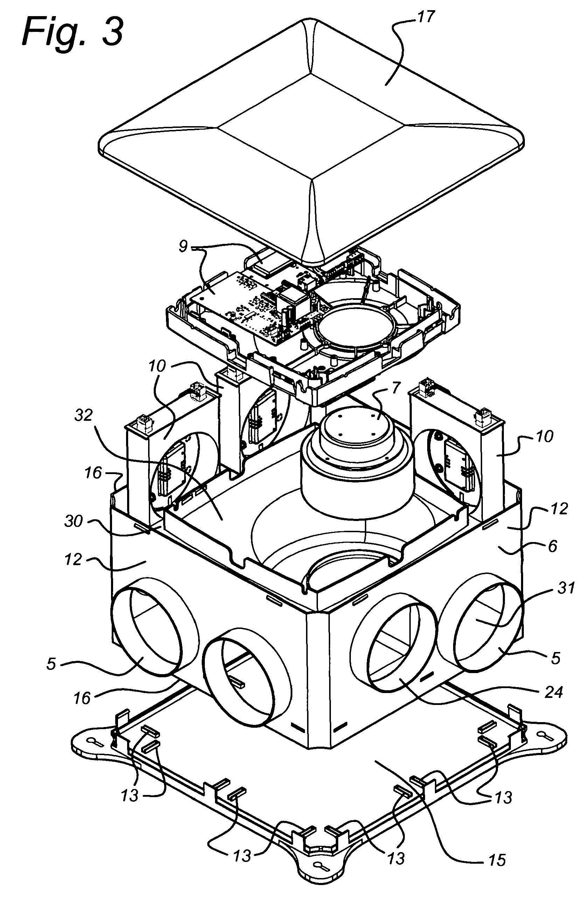

Figure 3 shows a partially cut-away cross section of the ventilation system. A cover 17 is provided to be placed on the top edges 16 of the side walls 12. Said cover covers the interior of the housing 6, so that the regulating system 9, the active ventilator 7 and the carriers 10 are protected against influences from outside.

Figure 4 shows a variant of a carrier 10 from Figures 2 and 3. The carrier 10 comprises a carrier housing 25 or cartridge comprising supporting elements 20 for supporting the carrier 10 on the base part 15 of the housing 6, in particular with respect to the positioning elements 13 of the base part 15. The carrier housing 25 also comprises a ring-shaped part 19 in which a rotatable flap 18 is accommodated. The rotatable flap 18 substantially closes off the opening 28 of the ring-shaped part 19, but is rotatable so that the amount of the air flow, the flow rate, can be controlled by increasing or decreasing the size of the opening between the flap 18 and the inside 26 of the ring part 19 . The flap 18 is provided with a holder 23 containing a sensor unit comprising a printed circuit board with electronic circuits and a sensor (not illustrated). The sensor can be configured to measure a property of the air, such as humidity, CO2 content or the like.

The holder of the flap 18 is provided with leakage flow openings 22, so that the air flow generated when the flap 18 is completely closed is minimal. The leakage flow openings 22 also ensure contact between the sensor unit and the air flow between the ventilation system and the room 2 to be ventilated. The flow rate, and therefore the degree to which the flap 18 is opened, is controlled by the regulating system 9 in the housing 6. The regulating system is connected via connection elements 14 to a motor 21 for driving the flap 18. The motor 21 allows the flap 18 to rotate about a rotation shaft 27.

It is not necessary to arrange a carrier 10 at each nozzle 5. It is also not necessary to attach each nozzle 5 to a duct 3. In such a case, the relevant nozzle 5 can be closed off by means of a cap (not illustrated).

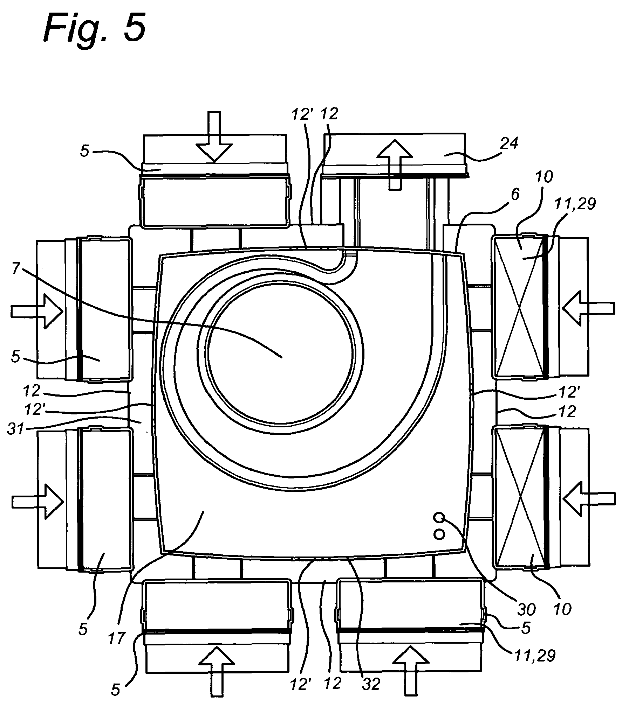

The variant in Figure 5 uses a housing 6 having a suction chamber 31 and a discharge having four side walls 12, 12', covered by the cover 17. Underneath the cover 17 is the ventilator 7 which is connected to the discharge nozzle 24. It is also possible for the regulating system to be located there. The supply nozzles 11 are also accommodated in the side walls 12. The side walls 12 delimit the suction chamber 31 into which the nozzles 11 issue, while the side walls 12' delimit the component area 32. In this embodiment, the guides 11 with the carriers 29 are situated outside the side walls 12 of the housing 6 in the nozzles 5, specifically between the outlet of the nozzles 5 in the housing 6 and the free end of the nozzles 5. In this case, the mouths 29 of the guides are therefore not covered by the cover 17. As a result, the carriers 10 can be moved into and out of the guides without removing the cover.

### List of reference numerals

- 1.: Dwelling
- 2.: Room
- 3.: Duct
- 4.: Valve
- 5.: Nozzle
- 6.: Central housing
- 7.: Active ventilator
- 8.: Discharge
- 9.: Regulating system
- 10.: Carrier
- 11.: Guide or receptacle
- 12.,12': Side wall
- 13.: Positioning element
- 14.: Connection element
- 15.: Base part
- 16.: Edge of side wall
- 17.: Cover
- 18.: Flap
- 19.: Ring-shaped part
- 20.: Supporting element
- 21.: Motor
- 22.: Leakage flow opening
- 23.: Holder
- 24.: Outlet
- 25.: Carrier housing
- 26.: Inside of ring part
- 27.: Rotation shaft
- 28.: Opening of ring-shaped part
- 29.: Mouth of guide
- 30.: Intermediate wall
- 31.: Suction chamber
- 32.: Component area

## Claims

1. Ventilation system, comprising a central housing (6) having at least one nozzle (5), an active ventilator (7) in the housing and a flow-regulating means which comprises: a flow-rate regulator (18, 21) for regulating an air flow through the nozzle,
at least one measuring system (22, 23) for measuring a property of the air, and a regulating system (9) for controlling the flow-rate regulator on the basis of a property of the air measured by the measuring system, wherein the central housing (6) is provided with a continuous peripheral wall (12) with peripheral edges (16) facing away from one another, between which the at least one nozzle (5) is located, and with a cover (17) on one of the peripheral edges, which cover covers the interior space of the central housing, **characterized in that** a carrier (10) is connected to at least one nozzle (5), said carrier (10) comprising at least the flow-rate regulator (18, 21), **in that** a guide (11) or receptacle is provided by means of which the carrier (10) is accommodated with a narrow fit by being pushed inwards, and **in that** the mouth (29) of a guide (11) faces the peripheral edge (16) on which the cover (17) is located wherein the guide (11) is oriented transversely with respect to the axis of the nozzle (5).

2. Ventilation system according to Claim 1, wherein the carrier (10) is substantially immovable in a transverse direction with respect to the receiving direction after it has been received in the guide (11).

3. Ventilation system according to one of the preceding claims, wherein the guide (11) and the carrier (10) are located inside the central housing (6) and the cover (17) preferably covers both the guide (11) and a carrier (10) optionally accommodated therein.

4. Ventilation system according to one of the preceding claims, wherein the guide (11) and the carrier (10) are located outside the peripheral wall (12) and/or preferably outside the periphery of the cover (17).

5. Ventilation system according to one of the preceding claims, wherein the carrier (10) is located at the outlet of the nozzle (5) in the central housing (6) at a distance from the free end of the nozzle.

6. Ventilation system according to one of the preceding claims, wherein the measuring system (22, 23) is provided on the movable part (18) of the flow-rate regulator.

7. Ventilation system according to one of the preceding claims, wherein the central housing (6) is provided with an intermediate wall (30) at a distance between the two peripheral edges, said intermediate wall (30) containing at least one mouth (29) in which the carrier (10) is accommodated by being pushed into the guide.

8. Ventilation system according to one of the preceding claims, wherein the central housing (6) is provided with a base (15) which bears positioning elements (13), such as ridges, on the side facing the interior of the central housing, into or onto which the carrier (10) is placed.

9. Ventilation system according to one of the preceding claims, wherein the carrier (10) comprises a ring element (19) in which a correspondingly shaped rotatable or displaceable flap (18) of the flow-rate regulator is accommodated, which ring element (19) is preferably aligned with the nozzle (5), and the contour of the ring element preferably corresponds to the contour of the nozzle to form a continuous flow duct.

10. Ventilation system according to one of the preceding claims, wherein a plurality of nozzles (5) are provided, each with a respective guide (11) for accommodating the carrier (10).

11. Ventilation system according to one of the preceding claims, wherein the ventilator (7) is configured to suck in air via at least one nozzle (5) and the central housing (6) comprises an outlet (24) for discharging the air which is sucked in via the at least one nozzle, or wherein the ventilator is configured to emit air via at least one nozzle and the housing comprises an input for supplying the air which is emitted via the at least one nozzle.

12. Ventilation system according to one of the preceding claims, wherein the nozzle (5) is integral with the peripheral wall (12), or the nozzle (5) forms a separate part which is placed onto the peripheral wall (12).

13. Ventilation system according to claim 8, wherein the carrier (10) is configured as a cartridge (25) comprising the flow-rate regulator (18, 21) and the at least one measuring system (22, 23) for measuring a property of the air at the flow-rate regulator, wherein
the cartridge (25) comprises at least one supporting element (20) for supporting the carrier on the base (15) of the central housing (6).

14. Building, comprising at least one room, a ventilation system according to any of claims 1-13, wherein the ventilation system comprises a central housing (6) having at least one nozzle (5, 5", ...), and ducts (3, 3', ...) which each extend between the at least one room and a nozzle of the housing.

## Patentansprüche

1. Belüftungssystem, umfassend ein zentrales Gehäuse (6), das mindestens eine Düse (5), einen aktiven Ventilator (7) in dem Gehäuse und ein Strömungsregulierungsmittel aufweist, welches Folgendes umfasst: einen Strömungsgeschwindigkeitsregulator (18, 21) zum Regulieren einer Luftströmung durch die Düse, mindestens ein Messsystem (22, 23) zum Messen einer Eigenschaft der Luft, und ein Regulierungssystem (9) zum Steuern des Strömungsgeschwindigkeitsregulators auf Grundlage einer Eigenschaft der Luft, die durch das Messsystem gemessen wird, wobei das zentrale Gehäuse (6) mit einer durchgehenden Umfangswand (12) mit Umfangskanten (16) versehen ist, die von einander weg gerichtet sind, zwischen welchen die mindestens eine Düse (5) liegt, und mit einer Abdeckung (17) auf einer der Umfangskanten, welche Abdeckung den Innenraum des zentralen Gehäuses abdeckt, **dadurch gekennzeichnet, dass** ein Träger (10) mit mindestens einer Düse (5) verbunden ist, wobei der Träger (10) mindestens den Strömungsgeschwindigkeitsregulator (18, 21) umfasst, dass eine Führung (11) oder Aufnahme vorgesehen ist, durch welche der Träger (10) mit einer engen Passung untergebracht ist, indem er nach innen gedrückt wird, und dass die Mündung (29) einer Führung (11) der Umfangskante (16) gegenüberliegt, auf welcher die Abdeckung (17) liegt, wobei die Führung (11) bezüglich der Achse der Düse (5) quer ausgerichtet ist.

2. Belüftungssystem nach Anspruch 1, wobei der Träger (10) im Wesentlichen in einer Querrichtung bezüglich der Aufnahmerichtung unbeweglich ist, nachdem er in der Führung (11) aufgenommen worden ist.

3. Belüftungssystem nach einem der vorherigen Ansprüche, wobei die Führung (11) und der Träger (10) innerhalb des zentralen Gehäuses (6) liegen und die Abdeckung (17) vorzugsweise sowohl die Führung (11) als auch einen Träger (10), der optional in dieser untergebracht ist, abdeckt.

4. Belüftungssystem nach einem der vorherigen Ansprüche, wobei die Führung (11) und der Träger (10) außerhalb der Umfangswand (12) und/oder vorzugsweise außerhalb des Umfangs der Abdeckung (17) liegen.

5. Belüftungssystem nach einem der vorherigen Ansprüche, wobei der Träger (10) an dem Auslass der Düse (5) in dem zentralen Gehäuse (6) in einem Abstand von dem freien Ende der Düse liegt.

6. Belüftungssystem nach einem der vorherigen Ansprüche, wobei das Messsystem (22, 23) auf dem beweglichen Teil (18) des Strömungsgeschwindigkeitsregulators vorgesehen ist.

7. Belüftungssystem nach einem der vorherigen Ansprüche, wobei das zentrale Gehäuse (6) mit einer Zwischenwand (30) in einem Abstand zwischen den beiden Umfangskanten versehen ist, wobei die Zwischenwand (30) mindestens eine Mündung (29) enthält, in welcher der Träger (10) untergebracht ist, indem er in die Führung geschoben wird.

8. Belüftungssystem nach einem der vorherigen Ansprüche, wobei das zentrale Gehäuse (6) mit einem Boden (15) versehen ist, welcher Positionierungselemente (13) wie Rippen auf der Seite gegenüber dem Inneren des zentralen Gehäuses trägt, in oder auf welchem der Träger (10) platziert ist.

9. Belüftungssystem nach einem der vorherigen Ansprüche, wobei der Träger (10) ein Ringelement (19) umfasst, in welchem eine entsprechend geformte drehbare oder verschiebbare Klappe (18) des Strömungsgeschwindigkeitsregulators untergebracht ist, welches Ringelement (19) vorzugsweise mit der Düse (5) fluchtet, und der Umriss des Ringelements vorzugsweise dem Umriss der Düse entspricht, um eine durchgehende Strömungsleitung zu bilden.

10. Belüftungssystem nach einem der vorherigen Ansprüche, wobei mehrere Düsen (5) vorgesehen sind, von welchen jede eine jeweilige Führung (11) zum Unterbringen des Trägers (10) aufweist.

11. Belüftungssystem nach einem der vorherigen Ansprüche, wobei der Ventilator (7) ausgebildet ist, um Luft über mindestens eine Düse (5) einzusaugen, und das zentrale Gehäuse (6) einen Auslass (24) zum Ablassen der Luft, welche über die mindestens eine Düse eingesaugt wird, umfasst, oder wobei der Ventilator ausgebildet ist, um Luft über mindestens eine Düse auszugeben und das Gehäuse einen Eingang zum Zuführen der Luft, welche über die mindestens eine Düse ausgegeben wird, umfasst.

12. Belüftungssystem nach einem der vorherigen Ansprüche, wobei die Düse (5) einstückig mit der Umfangswand (12) ausgebildet ist oder die Düse (5) einen separaten Teil bildet, welcher auf der Umfangswand (12) platziert ist.

13. Belüftungssystem nach Anspruch 8, wobei der Träger (10) als eine Kartusche (25) ausgebildet ist, die den Strömungsgeschwindigkeitsregulator (18, 21) und das mindestens eine Messsystem (22, 23) zum Messen einer Eigenschaft der Luft an dem Strömungsgeschwindigkeitsregulator umfasst, wobei die Kartusche (25) mindestens ein Stützelement (20) zum Stützen des Trägers auf dem Boden (15) des zentralen Gehäuses (6) umfasst.

14. Gebäude umfassend mindestens einen Raum, ein Belüftungssystem nach einem der Ansprüche 1-13, wobei das Belüftungssystem ein zentrales Gehäuse (6) umfasst, das mindestens eine Düse (5, 5",...) und Leitungen (3, 3',...) aufweist, welche sich jeweils zwischen dem mindestens einen Raum und einer Düse des Gehäuses erstrecken.

## Revendications

1. Système de ventilation, comprenant un boîtier central (6) comportant au moins une buse (5), un ventilateur actif (7) dans le boîtier et un moyen de régulation d'écoulement qui comprend : un régulateur de débit (18, 21) destiné à réguler un écoulement d'air à travers la buse, au moins un système de mesure (22, 23) destiné à mesurer une propriété de l'air, et un système de régulation (9) destiné à commander le régulateur de débit sur la base d'une propriété de l'air mesurée par le système de mesure, le boîtier central (6) étant pourvu d'une paroi périphérique continue (12) munie de bords périphériques (16) dirigés à l'opposé l'un de l'autre, entre lesquels au moins une buse (5) est disposé, et d'un couvercle (17) sur l'un des bords périphériques, lequel couvercle recouvre l'espace intérieur du boîtier central, caractérisé en ce qu'un support (10) est relié à au moins une buse (5), ledit support (10) comprenant au moins le régulateur de débit (18, 21), en ce qu'un guide (11) ou un réceptacle est prévu au moyen duquel le support (10) est logé avec un ajustement étroit par enfoncement à l'intérieur, et en ce que l'embouchure (29) d'un guide (11) est dirigée vers le bord périphérique (16) sur lequel le couvercle (17) est situé, le guide (11) étant orienté transversalement par rapport à l'axe de la buse (5).

2. Système de ventilation selon la revendication 1, dans lequel le support (10) est sensiblement immobile dans une direction transversale par rapport à la direction de réception après qu'il a été reçu dans le guide (11).

3. Système de ventilation selon l'une des revendications précédentes, dans lequel le guide (11) et le support (10) sont situés à l'intérieur du boîtier central (6) et le couvercle (17) recouvre de préférence à la fois le guide (11) et un support (10) éventuellement logé à l'intérieur.

4. Système de ventilation selon l'une des revendications précédentes, dans lequel le guide (11) et le support (10) sont situés à l'extérieur de la paroi périphérique (12) et/ou de préférence à l'extérieur de la périphérie du couvercle (17).

5. Système de ventilation selon l'une des revendications précédentes, dans lequel le support (10) est située à la sortie de la buse (5) dans le boîtier central (6) à une certaine distance de l'extrémité libre de la buse.

6. Système de ventilation selon l'une des revendications précédentes, dans lequel le système de mesure (22, 23) est prévu sur la partie mobile (18) du régulateur de débit.

7. Système de ventilation selon l'une des revendications précédentes, dans lequel le boîtier central (6) est pourvu d'une paroi intermédiaire (30) à une certaine distance entre les deux bords périphériques, ladite paroi intermédiaire (30) contenant au moins une embouchure (29) dans laquelle le support (10) est logé par enfoncement dans le guide.

8. Système de ventilation selon l'une des revendications précédentes, dans lequel le boîtier central (6) est pourvu d'une base (15), qui porte des éléments de positionnement (13), tels que des nervures, sur le côté dirigé vers l'intérieur du boîtier central, dans ou sur lequel le support (10) est placé.

9. Système de ventilation selon l'une des revendications précédentes, dans lequel le support (10) comprend un élément annulaire (19) dans lequel est logé un volet rotatif ou coulissant (18) de forme correspondante du régulateur de débit, lequel élément annulaire (19) est de préférence aligné avec la buse (5) et le contour de l'élément annulaire correspond de préférence au contour de la buse pour former un conduit d'écoulement continu.

10. Système de ventilation selon l'une des revendications précédentes, dans lequel il est prévu une pluralité de buses (5), chacune d'elles étant pourvue d'un guide respectif (11) destiné à loger le support (10).

11. Système de ventilation selon l'une des revendications précédentes, dans lequel le ventilateur (7) est configuré pour aspirer de l'air par le biais d'au moins une buse (5) et le logement central (6) comprend une sortie (24) destinée à évacuer l'air qui est aspiré à l'intérieur par le biais d'au moins une buse, ou dans lequel le ventilateur est configuré pour émettre de l'air par le biais d'au moins une buse et le boîtier comprend une entrée destinée à fournir de l'air qui est émis par le biais de l'au moins une buse.

12. Système de ventilation selon l'une des revendications précédentes, dans lequel la buse (5) est solidaire de la paroi périphérique (12) ou la buse (5) forme une partie séparée qui est placée sur la paroi périphérique (12).

13. Système de ventilation selon la revendication 8, dans lequel le support (10) est configuré en cartouche (25) comprenant le régulateur de débit (18, 21) et l'au moins un système de mesure (22, 23) destiné à mesurer une propriété de l'air au niveau du régulateur de débit, la cartouche (25) comprenant au moins un élément de support (20) destiné à supporter le support sur la base (15) du boîtier central (6).

14. Bâtiment comprenant au moins une pièce, un système de ventilation selon l'une quelconque des revendications 1 à 13, le système de ventilation comprenant un boîtier central (6) pourvu d'au moins une buse (5, 5",...), et des conduits (3, 3',...) qui s'étendent chacun entre l'au moins une pièce et une buse du boîtier.
